# EUROPÄISCHE PATENTSCHRIFT

(11) **EP 1 309 634 B1**
(45) Veröffentlichungstag und Bekanntmachung des Hinweises auf die Patenterteilung: **04.10.2006**
(21) Anmeldenummer: 01971853.5
(22) Anmeldetag: 02.08.2001
(51) Int. Cl.: C08F 20/00, C08F 220/00

(54) **WASSERLÖSLICHE ODER WASSERQUELLBARE SULFOGRUPPENHALTIGE ASSOZIATIVVERDICKENDE COPOLYMERE, VERFAHREN ZU DEREN HERSTELLUNG UND IHRE VERWENDUNG**
WATER-SOLUBLE OR WATER-SWELLABLE, ASSOCIATIVELY THICKENING COPOLYMERS CONTAINING SULFO GROUPS, METHOD FOR PRODUCING THE SAME AND USE THEREOF
COPOLYMERES HYDROSOLUBLES OU GONFLANT DANS L'EAU, RENFERMANT DES GROUPES SULFO ET S'EPAISSISSANT PAR ASSOCIATION, LEUR PROCEDE DE PRODUCTION ET LEUR UTILISATION

(30) Priorität: 02.08.2000 DE 10037629
(43) Veröffentlichungstag der Anmeldung: 14.05.2003
(73) Patentinhaber: Construction Research & Technology GmbH, 83308 Trostberg (DE)
(72) Erfinder: SCHINABECK, Michael, 84518 Garching (DE); ALBRECHT, Gerhard, 83342 Tacherting (DE); KERN, Alfred, 84558 Kirchweidach (DE); SCHUHBECK, Manfred, 83308 Trostberg (DE); MELZER, Michaela, 84550 Feichten (DE)
(74) Vertreter: Dey, Michael
(86) Internationale Anmeldenummer: PCT/EP2001/008938
(87) Internationale Veröffentlichungsnummer: WO 2002/010229

(56) Entgegenhaltungen:
- US-A- 4 608 425
- US-A- 4 710 555
- US-A- 5 068 278

## Beschreibung

Die vorliegende Erfindung betrifft wasserlösliche oder wasserquellbare sulfogruppenhaltige assoziativ verdickende Copolymere, Verfahren zu deren Herstellung und die Verwendung dieser Copolymere in wässrigen Baustoffsystemen auf der Basis hydraulischer Bindemittel wie Zement, Kalk, Gips, Anhydrit usw. sowie in wasserbasierenden Anstrich- und Beschichtungssystemen.

Üblicherweise werden wasserlösliche nicht ionische Abkömmlinge von Polysacchariden, insbesondere Cellulose- und Stärkederivate, in wässrigen Baustoffmischungen verwendet, um das unerwünschte Verdunsten des für die Hydratation und Verarbeitung erforderlichen Wassers bzw. dessen Abfließen in den Untergrund zu verzögern bzw. zu verhindern.

Die Möglichkeit, den Wasserhaushalt in Anstrichsystemen, Putzen, Klebemörteln, Spachtelmassen und Fugenfüllern, aber auch in Spritzbetonen für den Tunnelbau sowie in Unterwasserbetonen durch derartige Zusätze zu kontrollieren, hat weitreichende praktische Konsequenzen. Es werden hierdurch nämlich sowohl die Eigenschaften des Baustoffs im Zustand seiner Verarbeitung als auch seine Eigenschaften im erhärteten bzw. getrockneten Zustand maßgeblich beeinflußt. Über die zentrale Funktion Wasserretention beeinflussen derartige Zusätze daher auch Konsistenz (Plastizität), offene Zeit, Glättvermögen, Segregation, Klebrigkeit, Haftung (am Untergrund und am Werkzeug), Standfestigkeit und Abrutschwiderstand sowie Haftzug- und Druckfestigkeit bzw. Schwindung.

Die gemäß Ullmann's Enzyklopädie der Technischen Chemie (4. Auflage, Band 9, Seiten 208 - 210, Verlag Chemie Weinheim) gebräuchlichsten Wasserretentionsmittel sind synthetisch erzeugte nichtionische Cellulose- und Stärkederivate, wie Methylcellulose (MC), Hydroxyethylcellulose (HEC), Hydroxyethylmethylcellulose (HEMC). Aber auch mikrobiell erzeugte Polysaccharide, wie Welan Gum und natürlich vorkommende extraktiv isolierte Polysaccharide (Hydrocolloide), wie Alginate, Xanthane, Carageenane, Galactomannane usw., werden entsprechend dem Stand der Technik zur Regelung des Wasserhaushaltes und der Rheologie von wässrigen Baustoff- und Anstrichsystemen verwendet.

Nachteilig bei diesen Produkten ist die Verwendung von bekanntermaßen physiologisch bedenklichen Rohstoffen wie Ethylenoxid, Propylenoxid und Methylchlorid im Herstellprozess.

Der Einsatz von nichtionischen Cellulosederivaten im Baustoff- und Anstrichsektor wird in einer Reihe von Druckschriften, so in der DE-OS 39 34 870 beschrieben. Derartige Produkte weisen niedrige thermische Flockungspunkte auf, was dazu führt, daß das Wasserretentionsvermögen bei Temperaturen oberhalb von 30 °C drastisch zurückgeht. Darüber hinaus ist das rheologische Eigenschaftsprofil dieser Produkte in Anstrichsystemen unzureichend, da Pigmente aufgrund fehlender adsorptiver Kräfte der Additive ungenügend dispergiert werden. Durch die Verwendung von Celluloseethern, welche ionische Gruppen enthalten, können diese Probleme gelöst werden.

So werden z.B. in der US-PS 5,372,642 Methylhydroxyalkylcarboxymethylcellulosen beschrieben, die in kalk- und zementhaltigen Mischungen keinen Abfall der Wasserretention ergeben, wenn die Anwendungstemperatur von 20 auf 40 ° C erhöht wird.

Ferner werden in dem US-Patent 5,863,975 synthetische Polymere beschrieben, die Wasserrückhalteeigenschaften besitzen und carboxylgruppenhaltige Monomere wie Acrylsäure enthalten. Aufgrund der Carboxylatgruppen bewirken sie ebenso wie die Methylhydroxyalkylcarboxymethylcellulosen in hydraulischen Bindemitteln ein stark verzögerndes Aushärten.

Außerdem ist eine generelle Unverträglichkeit mit mehrwertigen Kationen, wie Ca²⁺ und Al³⁺ nicht auszuschließen, was zur Ausflockung und damit zur Unwirksamkeit dieser Produkte führen kann.

Sulfoalkylierte Cellulosederivate werden u.a. in der EP-A 554 749 beschrieben. Sie weisen ebenso wie die sulfogruppenhaltigen Polyelektrolyte gemäß DE-OS 198 06 482 im Vergleich zu carboxygruppenhaltigen Produkten eine ausgezeichnete Verträglichkeit mit mehrwertigen Kationen auf.

Die sulfoalkylierten Cellulosederivate zeigen aber im Gegensatz zu den sulfogruppenhaltigen Polymeren gemäß DE-OS 198 06 482 bei Anwendung in Klebemörteln und Putzen starke abbindeverzögernde Eigenschaften.

Alle langkettigen ionischen Polymere, ob auf Cellulosebasis oder synthetisch hergestellt, führen auf Grund ihrer Polyelektrolyteigenschaften in salzarmen Lösungen hohe Viskositäten ein. Liegt aber ein hoher Salzgehalt vor, fällt die Viskosität stark ab.

Speziell in Baustoffmischungen, die hydraulische Bindemittel und andere ionische Zusätze enthalten, tritt daher folgendes Problem auf: Werden die Baustoffmischungen, die solche Polyelektrolyten enthalten, frisch angerührt, verursachen sie eine hohe Viskosität. Nach einer Reifezeit von 5-10 min bewirkt die hohe Salzkonzentration in der wässrigen Phase der angerührten Baustoffmischung einen Abfall der Viskosität. In Klebemörteln erzielt man mit diesen Produkten nur unzureichend hohe Standfestigkeit, insbesondere bei Verwendung schwerer Fliesen. Außerdem ist eine konstante Verarbeitungskonsistenz über einen praxisgerechten Verarbeitungszeitraum eine wesentliche Forderung des Anwenders derartiger Produkte.

Ein weiterer Nachteil polyelektrolythaltiger Baustoffsysteme ist die Unverträglichkeit und Destabilisierung der in den Baustoffsystemen (Putzen) enthaltenen Luftporenbildnern. Es gelingt deshalb nicht, Produkte mit hohem Luftporengehalt wie z.B. Sanierputz herzustellen, da die geforderten Verarbeitungseigenschaften stark vom Luftporengehalt und der Luftporenverteilung abhängen.

Ferner treten bei den sulfogruppenhaltigen Polyelektrolyten gemäß DE-OS 198 06 482 Schwierigkeiten auf, die Polymere als Gelpolymere herzustellen. Bei der Technologie der Gelpolymerisation erhält man nach der Polymerisation meist einen Gelblock, der zerkleinert werden muss, um das Polymer effektiv trocknen zu können.

Um den Gelblock zerkleinern zu können, ist die Konsistenz des Gelblocks von großer Bedeutung. Nur bei sehr hohen Kettenlängen ist das Gel so hart, dass man den Gelblock schneiden kann. Andernfalls ist das Zerkleinern nur unter großen Schwierigkeiten und technischen Aufwand möglich.

Das erzeugte Gelgranulat neigt selbst in Kombination mit einem Trennmittel zum Verkleben und deshalb ist das weitere Verarbeiten (Fördern und Trocknen) problematisch. Die Technologie der Gelpolymerisation ist nur erschwert unter hohem technischen Aufwand einsetzbar.

Der vorliegenden Erfindung lag daher die Aufgabe zugrunde, wasserlösliche oder wasserquellbare Copolymere zu entwickeln, welche die genannten Nachteile des Standes der Technik nicht aufweisen, sondern auch bei vergleichsweise hohen Temperaturen wirken, auch bei hohem Elektrolytgehalt konstant verdickende Eigenschaften zeigen sowie auch nach dem Verfahren der Gelpolymerisiation einfach und gut reproduzierbar herstellbar sind und darüber hinaus den Baustoff- und Anstrichsystemen ausgezeichnete anwendungstechnische Eigenschaften bei der Verarbeitung und im erhärteten bzw. getrockneten Zustand verleihen.

Diese Aufgabe wurde erfindungsgemäß durch die Copolymere entsprechend Anspruch 1 gelöst.

Es hat sich nämlich überraschenderweise gezeigt, dass die erfindungsgemäßen Copolymere auch bei relativ geringen Einsatzmengen hochwirksame und gut verträgliche Wasserretentionsmittel in Baustoff- und Anstrichsystemen darstellen und dabei verbesserte Eigenschaften gegenüber derzeit verwendeten Produkten aufweisen. Ferner kann man durch den amphiphilen Charakter der Polymere und die hydrophob modifizierten Seitenketten die Wasserretention deutlich verbessern und die verdickenden Eigenschaften gezielt einstellen. Selbst bei hohen Salzkonzentrationen ist eine praxisgerechte gleichbleibende Verarbeitungskonsistenz einstellbar. Auch diese Effekte waren keinesfalls vorhersehbar.

Die Copolymere entsprechend der vorliegenden Erfindung bestehen aus mindestens vier Baugruppen a), b), c) und d). Die erste Baugruppe stellt ein sulfogruppenhaltiges substituiertes Acryl- oder Methacrylderivat der Formel I dar: 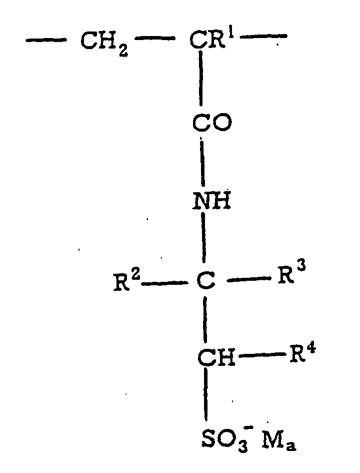 mit R¹ = Wasserstoff oder Methyl, R², R³, R⁴ = Wasserstoff, aliphatischer Kohlenwasserstoffrest mit 1 bis 6 C-Atomen, gegebenenfalls mit 1 bis 5, vorzugsweise bis 3 Methylgruppen substituierter Phenylrest und M = Wasserstoff, ein- oder zweiwertiges Metallkation, Ammonium bzw. ein organischer Aminrest sowie a = 1/2 oder 1. Als ein- oder zweiwertiges Metallkation finden vorzugsweise Alkalimetallionen oder/und Erdalkalimetallionen und insbesondere Natrium-, Kalium-, Calcium- oder Magnesiumionen Verwendung. Als organische Aminreste werden vorzugsweise substituierte Ammoniumgruppen eingesetzt, die sich ableiten von primären, sekundären oder tertiären Aminen mit C₁- bis C₂₀-Alkyl-, C₁- bis C₂₀-Alkanol-, C₅- bis C₈-Cycloalkyl- oder/und C₆- bis C₁₄-Arylresten. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin, die jeweils in der protonierten Ammoniumform einen organischen Aminrest als Rest M gemäß der Erfindung darstellen.

Die Baugruppe a) leitet sich ab von Monomeren wie 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure. Besonders bevorzugt ist 2-Acrylamido-2-methylpropansulfonsäure.

Die zweite Baugruppe b) entspricht der Formel IIa) und/oder IIb): 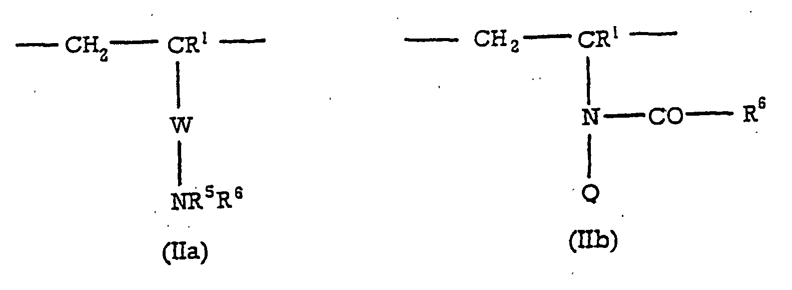 worin
W = -CO-, -CO-O-(CH₂)ₓ-, -CO-NR²-(CH₂)ₓ-
x = 1 bis 6 darstellen und
R¹ sowie R² oben genannte Bedeutung besitzen.

R⁵ und R⁶ stehen unabhängig voneinander für Wasserstoff, einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen. Diese Reste können ggf. mit Hydroxyl-, Carboxyl- oder Sulfonsäuregruppen substituiert sein.

Q bedeutet in Formel IIb) Wasserstoff oder -CHR⁵R⁷. Im Falle von Q ≠ H können R⁵ und R⁶ außerdem in der Struktur IIb) zusammen für eine -CH₂₋(CH₂)_{y}-Methylengruppe mit y = 1 bis 4 stehen, die unter Einschluss des Restes der Formel IIb) 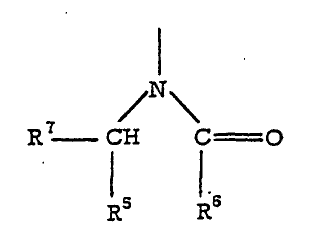 einen fünf- bis achtgliedrigen heterozyklischen Ring bilden. R⁷ kann ein Wasserstoffatom, einen C₁- bis C₄-Alkylrest, eine Carboxylsäure- oder eine Carboxylatgruppe -COOMₐ darstellen, wobei M und a die oben genannte Bedeutung besitzen.

Als Monomere, die die Struktur IIa) bilden, kommen vorzugsweise folgende Verbindungen in Frage: Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur IIb) sind N-Methyl-N-vinylformamid, N-Methyl-N-vinylacetamid, N-Vinylpyrrolidon, N-Vinylcaprolactam, N-Vinylpyrrolidon-5-carbonsäure u. a.

Die dritte Baugruppe c) entspricht den Formeln IIIa und/odeer IIIb 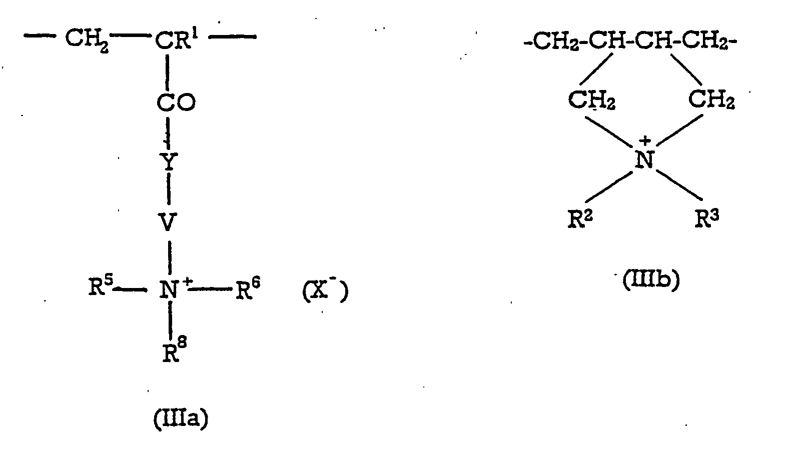 worin
Y = O, NH oder NR⁵
V = -(CH₂)ₓ-, 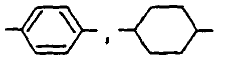
R⁸ = R⁵ bzw. R⁶, -(CH₂)ₓ-SO₃^{⊖} (M), 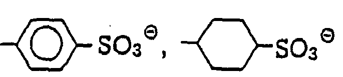
X = Halogen (vorzugsweise Cl, Br), C₁-bis C4-Alkylsulfat (vorzugsweise Methylsulfat) oder C₁- bis C₄-Alkylsulfonat und
R¹, R², R³, R⁵, R⁶ und x oben genannte Bedeutung besitzen.

Als Monomere, welche die Struktur (IIIa) bilden, kommen vorzugsweise folgende Verbindungen in Frage: [2-(Acryloyloxy)-ethyl]-trimethylammoniumchlorid, [2-(Acryloylamino)-ethyl]-trimethyl-ammoniumchlorid, [2-(Acryloyloxy)-ethyl]-trimethyl- ammoniummethosulfat, [2-(Methacryloyloxy)-ethyl]-trimethylammonium-chlorid bzw. -methosulfat, [3-(Methacryloylamino)-propyl]-trimethylammoniumchlorid,N-(3-Sulfopropyl)-N-methacryloxyethyl-N'-N-dimethyl-ammonium-betain, N-(3-Sulfopropyl)-N-methyacrylamidopropyl-N,N-dimethyl-ammonium-betain und 1-(3-Sulfopropyl)-2-vinyl-pyridinium-betain.

Beispiele für Monomere als Basis für die Struktur IIIb sind N,N-Dimethyl-diallyl-ammoniumchlorid und N,N-Diethyl-diallyl-ammoniumchlorid.

Die vierte Baugruppe d) entspricht der Formel IV 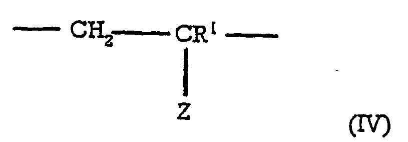 mit
Z = -COO(CₘH₂ₘO)ₙ-R⁹, -(CH₂)ₚ-O(CₘH₂ₘO)ₙ-R⁹
R⁹ = 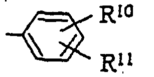 sowie ungesättigter oder gesättigter, linearer oder verzweigter, aliphatischer Kohlenwasserstoffrest mit 22 bis 40 C-Atomen
R¹⁰ = H, C₁-C₄-Alkyl-, Phenyl-, Benzyl-, C₁-C₄-Alkoxy, Halogen (F, Cl,
Br, I), Cyano, -COOH, -COOR⁵, -CO-NH₂, -OCOR⁵
R¹¹ = Arylalkylgruppe mit C₁-C₁₂-Alkyl- und C₆-C₁₄-Arylrest
m = 2 bis 4
n = 0 bis 200
p = 0 bis 20
sowie R¹ und R⁵ die oben genannte Bedeutung besitzen.

Bevorzugte Monomere, welche die Struktur IV bilden, sind Tristyrylpolyethylenglykol-1100-methacrylat, Behenylpolyethylenglykol-1100-methacrylat, Tristyrylpolyethylenglykol-1100-acrylat, Tristyrylpolyethenglykol-1100-monovinylether, Behenylpolyethenglykol-1100-monovinylether, Phenyltriethylenglykolacrylat, Tristyrylpolyethylenglykol-1100-vinyloxy-butylether, Behenylpolyethylenglykol-1100-vinyloxy-butylether, Tristyrylpolyethylenglykol-block-propylenglykolallylether, Behenylpolyethylenglykol-block-propylenglykolallyletherusw.

Es ist als erfindungswesentlich anzusehen, dass die Copolymere aus 3 bis 96 Mol-% der Baugruppe a), 3 bis 96 Mol-% der Baugruppe b) und 0,05 bis 75 Mol-% der Baugruppe c), 0,01 bis 30 Mol-% der Baugruppe d) bestehen. Vorzugsweise verwendete Polymere enthalten 40 bis 80 Mol-% a), 15 bis 55 Mol-% b), 2 bis 30 Mol-% c) und 0,3 bis 10 Mol-% d).

Die Anzahl der sich wiederholenden Strukturelemente in den erfindungsgemäßen Copolymeren ist nicht eingeschränkt und hängt sehr stark vom jeweiligen Anwendungsgebiet ab. Es hat sich allerdings als vorteilhaft erwiesen, die Anzahl der Struktureinheiten so einzustellen, dass die Copolymere ein zahlenmittleres Molekulargewicht von 50.000 bis 20.000.000, bevorzugt von 500.000 bis 10.000.000, insbesondere bis 8.000.000 aufweisen.

Die Herstellung der erfindungsgemäßen Copolymere erfolgt in an sich bekannter Weise durch Verknüpfung der die Strukturen a) bis d) bildenden Monomere durch radikalische, ionische oder komplex koordinative Substanz-, Lösungs-, Gel-, Emulsions-, Dispersions- oder Suspensionspolymerisation. Da es sich bei den erfindungsgemäßen Produkten um wasserlösliche Copolymere handelt, ist die Polymerisation in wässriger Phase, die Polymerisation in umgekehrter Emulsion bzw. die Polymerisation in inverser Suspension bevorzugt. In besonders bevorzugten Ausführungsformen erfolgt die Umsetzung als Gelpolymerisation oder als inverse Suspensionspolymerisation in organischen Lösemitteln.

Wird das Verfahren in wässriger Phase durchgeführt, so ist insbesondere bei der Herstellung von Copolymeren im oberen Molekulargewichtsbereich (z.B. ≥ 1.000.000, insbesondere ≥ 10.000.000 Da), wie sie beispielsweise in Klebemörteln und im Unterwasserbeton verwendet werden, die Gelpolymerisation bevorzugt. Durch die Verwendung der Monomere aus der Baugruppe d) wird das Zerkleinern und Verarbeiten des Gels auch bei geringeren Polymerisationsgraden drastisch erleichtert und somit ist die. Gelpolymerisation aus wirtschaftlichen Gründen die bevorzugte Ausführungsform.

Aufgrund äußerst hoher Lösungsviskositäten derartiger hochmolekularer Produkte und des damit erforderlichen hohen Aufwands ist eine Lösungspolymerisation wirtschaftlich weniger sinnvoll. Die Herstellung von erfindungsgemäßen Copolymeren, deren Molekulargewicht im unteren oder mittleren Bereich (z.B. bis 5.000.000 Da) liegt (Anwendbarkeit in Fließestrichen als Antisegregationsmittel und Verdicker in Anstrichsystemen), kann demgegenüber durchaus in Form einer wässrigen Lösungspolymerisation erfolgen.

Die Umsetzung der Monomere wird hierbei insbesondere bei Temperaturen von -20 bis 250 °C, einer Konzentration von 5 bis 20 Gew.-% und einem pH-Wert von 4 bis 9 vorgenommen. Vorzugsweise erfolgt die Polymerisation bei 5 bis 120 °C unter Zuhilfenahme üblicher Radikalstarter wie Wasserstoffperoxid, Natrium-, Kalium- oder Ammoniumperoxodisulfat, Dibenzoylperoxid, 2,2'-Azo-bis-(2-amidinopropan)-dihydrochlorid, Azo-bis-(isobutyronitril) tert.-Butylhydroperoxid oder auf physikalischem Wege durch Bestrahlung oder elektrochemisch. Es ist ebenso möglich, die oben genannten Initiatoren mit Reduktionsmitteln wie Dibutylaminhydrochlorid, Na-Hydroxymethansulfinatdihydrat,Alkalimetallsulfitenund-metabisulfiten, Thioharnstoff, Übergangsmetallsalzen, die in der reduzierten Form vorliegen, wie Eisen-2-suifatheptahydrat u.a., zu Redoxsystemen zu kombinieren.

Die wasserlöslichen Azoinitiatoren können im Fall der Gelpolymerisation sowohl thermisch als auch photochemisch initiiert werden. Bevorzugt ist eine Kombination aus beidem.

Auch die Verwendung sonstiger Hilfsmittel, wie Molekulargewichtsreglern, z.B. Thioglykolsäure, Mercaptoethanol, Ameisensäure und Natriumhypophosphit, ist möglich.

Gegebenenfalls kann es notwendig sein, Polymere mit hohen Polymerisationsgrad und geringen Vernetzungsgrad zu erhalten, da diese Parameter einen bedeutenden Einfluss auf das Wasserrückhaltevermögen und eine hohe konstante Viskosität haben.

Dies gelingt mittels der bevorzugten Gelpolymerisation, wenn man bei niedrigen Reaktionstemperaturen und mit einem geeigneten Initiatorsystems polymerisiert. Durch die Kombination zweier Initiatorsysteme (Azoinitiatoren und Redoxsystem), die zuerst photochemisch bei niedrigen Temperaturen und anschließend aufgrund der Exothermie der Polymerisation thermisch gestartet werden, kann ein Umsatz von ≥99 % erreicht werden.

Das schnelle und schonende Trocknen vermeidet vernetzende Nebenreaktionen und bewirkt eine konstante Produktqualität.

Ferner sind die assoziativ verdickenden Monomere der Baugruppe d) mit mindesten 0,3 mol % notwendig, da sie einen großen Einfluß auf die Eigenschaften des Gelblocks haben. Die hydrophoben Monomere machen den Gelblock so hart, dass man ihn besser zerkleinern kann. Desweiteren verklebt das Gelgranulat in Kombination mit einem Trennmittel (z.B. Sitren 595 von der Firma Goldschmidt) nicht mehr.

Die rieselfähigen Gelteilchen sind deshalb leichter auf ein Trockengitter zu verteilen. Dadurch wird der Trocknungsprozesserleichtert und es können sogar die Trockenzeiten verkürzt werden.

Die Gelpolymerisation erfolgt vorzugsweise bei -5 bis 50 °C, wobei die Konzentration der wässrigen Lösung bevorzugt auf 40 bis 70 Gew.-% eingestellt wird. Zur Durchführung der Polymerisation gemäß einer bevorzugten Ausführungsform wird das Sulfoalkylacrylamid in Form seiner handelsüblichen Säureform in Wasser gelöst, durch Zugabe eines Alkalimetallhydroxids neutralisiert, unter Rühren mit weiteren erfindungsgemäß zu verwendenden Monomeren sowie mit Puffern, Molekulargewichtsreglern u.a. Polymerisationshilfsmitteln vermischt. Nach Einstellung des Polymerisations-pH-Wertes, der vorzugsweise zwischen 4 und 9 liegt, erfolgt eine Spülung des Gemisches mit einem Schutzgas, wie Helium oder Stickstoff, und anschließend die Aufheizung oder Abkühlung auf die entsprechende Polymerisationstemperatur. Wählt man die ungerührte Gelpolymerisation als Ausführungsform, wird in bevorzugten Schichtdicken von 2 bis 20 cm, insbesondere 8 bis 10 cm bei adiabatischen Reaktionsbedingungen polymerisiert. Die Polymerisation wird durch Zugabe des Polymerisationsinitiätors und durch Bestrahlung mit UV-Licht bei niedrigen Temperaturen (zwischen -5 und 10 °C) gestartet. Das Polymer wird nach vollständigen Umsatz der Monomere unter Einsatz eines Trennmittels (Sitren 595 von der Firma Goldschmidt) zerkleinert, um durch eine größere Oberfläche das Trocknen zu beschleunigen.

Die getrockneren Copolymere werden in getrockneter Form ihrer erfindungsgemäßen Verwendung zugeführt. Durch die möglichst schonenden Reaktions- und Trocknungsbedingungen können vernetzende Nebenreaktionen vermieden werden, so dass man Polymere erhält, die einen sehr geringen Gelanteil besitzen.

In einer weiteren bevorzugten Ausführungsform erfolgt die Copolymerisation als inverse Suspensionspolymerisation der wässrigen Monomerphase in einem organischen Lösemittel. Hierbei wird bevorzugt so verfahren, dass man das in Wasser gelöste und ggf. neutralisierte Monomergemisch in Gegenwart eines organischen Lösemittels, in welchem die wässrige Monomerphase nicht oder schwer löslich ist, polymerisiert. Vorzugsweise wird in Gegenwart von "Wasser in Öl"-Emulgatoren (W/O-Emulgatoren) und/oder Schutzkolloiden auf Basis nieder- oder hochmolekularer Verbindungen gearbeitet, die in Anteilen von 0,05 bis 20 Gew.-% bezogen auf die Monomere verwendet werden. Beispiele für derartige Stabilisatoren sind Hydroxypropylcellulose, Ethylcellulose, Methylcellulose, Celluloseacetatbutyratmischether, Copolymere aus Ethylen und Vinylacetat, Styrol und Butylacrylat, Polyoxyethylensorbitanmonooleat, -laurat, bzw. -stearat, Blockcopolymere aus Propylen- und Ethylenoxid u.a.

Als organische Lösemittel kommen u.a. in Frage lineare aliphatische Kohlenwasserstoffe wie n-Pentan, n-Hexan, n-Heptan, verzweigte aliphatische Kohlenwasserstoffe (Isoparaffine), cycloaliphatische Kohlenwasserstoffe wie Cyclohexan und Decalin sowie aromatische Kohlenwasserstoffe wie Benzol, Toluol und Xylol. Darüber hinaus eignen sich Alkohole, Ketone, Carbonsäureester, Nitroverbindungen, halogenhaltige Kohlenwasserstoffe, Ether und viele andere Solventien. Bevorzugt sind solche organischen Lösemittel, die mit Wasser azeotrope Gemische bilden.

Die wasserlöslichen oder wasserquellbaren Copolymere fallen zunächst in gelöster Form als feinverteilte wäßrige Tröpfchen im organischen Suspensionsmedium an und werden vorzugsweise durch Entfernen des Wassers als feste kugelförmige Partikel im organischen Suspensionsmittel isoliert. Nach Abtrennung des Suspensionsmittels und Trocknung verbleibt ein granulatförmiger Feststoff, der direkt oder in vermahlener Form seiner erfindungsgemäßen Verwendung zugeführt wird.

Die erfindungsgemäßen Polymerverbindungen eignen sich hervorragend als Zusatzmittel für wässrige Baustoffsysteme, die hydraulische Bindemittel, wie Zement, Kalk, Gips, Anhydrit usw., enthalten. Darüber hinaus sind sie in wasserbasierenden Anstrich- und Beschichtungssystemen anwendbar.

Die bevorzugten Einsatzmengen der erfindungsgemäßen Copolymere liegen in Abhängigkeit von der Verwendungsart zwischen 0,05 und 5 Gew.-% bezogen auf das Trockengewicht des Baustoff-, Anstrich- bzw. Beschichtungssystems.

Die Copolymere besitzen ausgezeichnete wasserrückhaltende Eigenschaften auch bei relativ hohen Anwendungstemperaturen und verleihen pigmenthaltigen Anstrichstoffen, Putzen, Klebemörteln, Spachtelmassen, Fugenfüllern, Spritzbeton, Unterwasserbeton, Erdölbohrzementen u.a. hervorragende anwendungstechnische Eigenschaften sowohl im Verarbeitungs- als auch im erhärteten bzw. getrockneten Zustand. Die Polymere zeichnen sich besonders dadurch aus, dass man mit ihnen in den Baustoffmischungen, auch bei hoher Elektrolytkonzentration, die verdickenden Eigenschaften gezielt über die Kettenlänge, Ladungsdichte, Amphiphilie und die hydrophoben Seitenketten einstellen kann. In Beton und Fließestrichen und anderen fließfähigen Ausgleichsmaßen dienen die Polymere in niedriger Dosierung als Stabilisatoren und Antisegregatitinsmittel.

Es werden wasserlösliche oder wasserquellbare sulfogruppenhaltige Copolymere auf Basis von (Meth-)Acrylamid-alkylsulfonsäuren und (Meth-) Acrylamid bzw. N-Vinyl-Verbindungen beschrieben sowie deren Verwendung als Zusatzmittel für wässrige Baustoffsysteme oder für wasserbasierende Anstrich- und Beschichtungssysteme. Die erfindungsgemäßen Copolymere stellen auch bei relativ geringen Einsatzmengen hochwirksame und gut verträgliche Wassserretentionsmittel in solchen Baustoff- und Anstrichsystemen dar.

Die folgenden Beispiele sollen die Erfindung näher erläutern.

### Beispiele

### Beispiel 1 (Gelpolymerisation)

In einem 1 I-Dreihalskolben mit Rührer und Thermometer werden 400 g Wasser vorgelegt. Unter Rühren wurden 87 g Natriumhydroxidplätzchen aufgelöst und langsam 450 g (2,17 Mol) 2-Acrylamido-2-methylpropansulfonsäure zugegeben und bis zum Erhalt einer klaren Lösung gerührt. Nach Zusatz von 0,50 g Citronensäurehydrat wurden unter Rühren und Kühlen mit 5 Gew.-%ige wässrige Natronlauge zugesetzt und ein pH-Wert von 4,60 eingestellt. Anschließend wurden nacheinander 83 g (0,83 Mol). N,N-Dimethylacrylamid, 55 g (0,12 Mol) [2-(Methacrylamido)-propyl]-trimethylammoniumchlorid (50 Gew.-%ige Lösung in Wasser) sowie 8,6 g (0,023 Mol) Tristyrylpolyethylenglykol-1100-methacrylat (Sipomer SEM 25 der Firma Rhodia; mit 25 Ethylenglykoleinheiten) zugesetzt, wobei der pH-Wert auf 3 abfiel. Die Lösung wurde mit 20% iger Natronlauge auf pH = 6,0 eingestellt und durch 30 minütige Spülung mit Stickstoff inertisiert und auf ca. 5 °C abgekühlt. Die Lösung wird in einen Plastikbehälter mit den Maßen (b*t*h) 15 cm *10cm *20 cm umgefüllt und anschließend wurden nacheinander 150 mg 2,2'-Azo-bis-(2-amidinopropan)-dihydrochlorid, 1,0 g 1 %iger Rongalitlösung und 10 g 0,1 %iger tert-Butylhydroperoxidlösung zugesetzt. Die Polymerisation wird durch Bestrahlen mit UV-Licht (zwei Philips Röhren; Cleo Performance 40 W) gestartet. Nach ca. 2-3 h wird das harte Gel aus dem Plastikbehälter genommen und mit einer Schere in ca. 5 cm* 5 cm* 5 cm große Gelwürfel geschnitten. Bevor die Gelwürfel mittels eines herkömmlichen Fleischwolfs zerkleinert werden, werden Sie mit dem Trennmittel Sitren 595 (Polydimethylsiloxan-Emulsion; Firma Goldschmidt) eingestrichen. Bei dem Trennmittel handelt es sich um eine Polydimethylsiloxanemulsion, die 1:20 mit Wasser verdünnt wurde.

Das erhaltene Gelgranulat wird gleichmäßig auf Trockengitter verteilt und in einem Umlufttrockenschrank bei ca. 90-120 °C im Vakuum bis zur Gewichtskonstanz getrocknet.

Es wurden ca. 500 g eines weißen, harten Granulats erhalten, weiches mit Hilfe einer Zentrifugalmühle in einen pulverigen Zustand überführt wurde.

### Beispiel 2 (Inverse Suspensionspolymerisation)

In einem 500 ml-Vierhalskolben mit Thermometer, Rührer, Rückflusskühler und Inertgasanschluss wurden 200 g Cyclohexan und 1,50 g Ethylcellulose (Ethoxylgehalt ca. 48,5 %, Substitutionsgrad ca. 2,50) vorgelegt. Nach 30 minütiger Inertisierung wurde der Reaktorinhalt auf die Rückflusstemperatur von 80 °C gebracht und über einen Zeitraum von 1 Stunde wurde eine wässrige Lösung aus 38,80 g (0,1872 Mol) 2-Acrylamido-2-methylpropansulfonsäure, 6,30 g (0,0636 Mol) N,N-Dimethylacrylamid, 4,05 (0,0092 Mol) [3-(Methacryloylamino)-propyl]-trimethylammoniumchlorid (50 Gew.-% in Wasser), 1,1 g (0,003 Mol) Tristyrylpolyethylenglykol-1100-methacrylat (SEM 25), 35,95 g 20 Gew.-%iger wässriger Natronlauge, 0,012 g 2,2'-Azo-bis-(2-amidinopropan)-dihydrochlorid und 5 g Wasser zugeführt. Nach Ende der Dosierung wurde noch weitere 2,5 Stunden bei 75 bis 80 °C kräftig gerührt und anschließend über einen Zeitraum von ca. 2 Stunden das Wasser azeotrop entfernt. Nach Abkühlung auf Raumtemperatur wurde der Feststoff in Form von spherisch geformten Partikeln abfiltriert, mit wenig Cyclohexan gewaschen und im Vakuum getrocknet.

Es verblieben 54,3 g eines feinen glasartigen Granulates, weiches durch Mahlung in ein weißes, feinkörniges Pulver überführt wurde.

### weitere Beispiele:

Es wurde verfahren wie im Beispiel 1 (Gelpolymerisation) beschrieben, jedoch unter Einsatz des in der Tabelle 1 angegebenen Polymerisationsgemisches:

**Tabelle 1**

| Monomer Baugruppe | | | | | | | |
|---|---|---|---|---|---|---|---|
| | a) | Natronlauge | Wasser | b) | c) | d) | Ausbeute |
| Beispiel 3 | 2-Acrylamido-2-methylpropansulfonsäure | wäßrige Natronlauge 50 Gew.-%ig | | Acrylamid (50 %ig in Wasser) | [2-(Methacrylamido)-propyl)-trimethylammonium-chlorid (50 Gew.-% in Wasser) | Tristyrylpolyethylenglykol-1100-mathacrylat (SEM 25) | |
| | 343,00 g (1,66 Mol) | 132,50 g | 224 g | 246,00 g (1,73 Mol) | 49,0 g (0,11 Mol) | 8,6 g (0.023 Mol) | 530 g |
| Beispiel 4 | 2-Acrylamido-2-methylpropansulfonsäure | wäßrige Natronlauge 50 Gew.-%ig | | N,N-Dimethyl-aminopropylacrylamid | [2-(Methacrylamido)-propyl]-trimethylammonium-chlorid (50 Gew.-% in Wasser) | Tristyrylpolyethylenglykol-1100-melhacrylat (SEM 25) | |
| | 343,00 g (1,66 Mol) | 132,50 g | 224 g | 83 g (0.52 Mol) | 49,0 g (0,11 Mol) | 8,6 g (0,023 Mol) | 510 g |
| Beispiel 5 | 2-Acrylamido-2-methylpropansulfonsäure | wäßrige Natronlauge 50 Gew.-%ig | | N,N-Dimethyl-acrylamid | N,N Dimethyl-diallylammoniumchlorid (60 %ig) | Tristyrylpolyethylenglykol-1100-methacrylat (SEM 25) | |
| | 343,00 g (1,66 Mol) | 132,50 g | 224 g | 83 g (0,83 Mol) | 48,0 g (3,7 Mol) | 8,6 g (0,023 Mol)) | 502 g |
| Beispiel 6 | 2-Acrylamido-2-methylpropansulfonsäure | wäßrige Natronlauge 50 Gew.-%ig | | N,N-Dimethyl-aminopropy acrylamid | [2-(Acrylamido)-propyl]-trimethylammoniumchlorid (60 Gew.-% in Wasser) | Tristyrylpolyethylenglykol-1100-mathacrylat (SEM 25) | |
| | 338,00 g (1,63 Mol) | 130,50 g | 300 g | 135,00 g (0,85 Mol) | 90,0 g (0,27 Mol) | 6,5 g (0,0023 Mol) | 530 g |
| Beispiel 7 | 2-Acrylamido-2-methylpropansulfonsäure | wäßrige Natronlauge 50 Gew.-%ig | | N,N-Dimethyl- acrylamid | N,N Dimethyl-diallylammoniumchlorid (60 %ig) | Behenylethylenglykol-1100-methacrylat (Sipomer BEM. Rhodia) | |
| | 343,00 g (1,66 Mol) | 132,50 g | 224 g | 83 g (0,83 Mol) | 48g (3,7 Mol) | 5,3 g (0.0017 Mol)) | 502 g |
| Beispiel 8 | 2-Acrylamido-2-methylpropansulfonsäure | wäßrige Natronlauge 50 Gew.-%ig | | N,N-Dimethyl- acrylamid | N,N Dimethyl-diallylammoniumchlorid (60 %ig) | Tristyrylpolyethylenglykol-1100-methacrylat (SEM 25) | |
| | 343,00 g (1,68 Mol) | 132,50 g | 224 g | 83 g (0,83 Mol) | 48g (3,7 Mol) | 19,5 g (0,0069 Mol) | 502 g |
| Beispiel 9 | 2-Acrylamido-2-methylpropansulfonsäure | wäßrige Natronlauge 50 Gew.-%ig | | N,N-Dimethyl- acrylamid | Methacrylamidopropyldimethyl Tristyrylpolyethylenglykol-ammonium-sulfobetain (MAAB) | Tristyrylpolyethylenglykol-1100-methacrylat (SEM 25) | |
| | 334,00 g (1,61 Mol) | 129,0 g | 381 | 78 g (0,74 Mol) | 75,0 g (0.28 Mol) | 6,0 g (0,0021 Mol) | 502 g |
| Vergleichsbeispiel 1 | 2-Acrylamido-2-methylpropansulfonsäure | wäßrige Natronlauge 50 Gew.-%ig | | N,N-Dimethyl-acrylamid | [2-(Methacrylamido)-propyl]-trimethylammonium-chlorid | Methylpolyethylenglykol-1100-methacrylat | |
| | 343,00 g (1,66 Mol) | 132,80 g | 224 g | 83 g (0,52 Mol) | 49,0 g (0,11 Mol) | 3,97 g (0,0047 Mol)) | 502 g |

### Vergleichsbeispiel 2 (Inverse Suspensionspolymerisation)

Nach dem Verfahren der inversen Suspensionspolymerisation wurde analog dem Beispiel 2, ein Gemisch folgender Zusammensetzung polymerisiert:

Es wird eine wässrige Lösung aus 38,80 g (0,1872 Mol) 2-Acrylamido-2-methylpropan- sulfonsäure, 6,30 g (0,0636 Mol) N,N-Dimethylacrylamid, 4,05 (0,0092 Mol) [3-(Methacryloylamino)-propyl]-trimethylammoniumchlorid (50 Gew.-% in Wasser), 1,99 g (0,004 Mol) Methylpolyethylenglykol-500-monovinylether, 35,95 g 20 Gew.-%iger wässriger Natronlauge, 0,012 g 2,2'-Azo-bis-(2-amidinopropan)-dihydrochlorid und 5 g Wasser in das organische Lösungsmittel eingetragen.

Nach der üblichen Trocknung und Aufarbeitung verblieben 51,2 g eines feinen glasartigen Granulates, welches durch Mahlung in ein weißes, feinkörniges Pulver überführt wurde.

### Vergleichsbeispiel 3

Handelsübliche Methylhydroxypropylcellulose mit einer Lösungsviskosität von 790 mm²/s (gemessen als 1 %ige wässrige Lösung bei 20 °C nach Ubbelohde).

In der Tabelle 2 werden die Zerkleinerungseigenschaften und die notwendigen Trocknungszeiten angegeben. Man sieht deutlich, dass durch den Einbau der Baugruppe c) in die Polymere gegenüber dem Vergleichsbeispiel 1 schonendere Trocknungsbedingungen und kürzere Trocknungszeiten möglich sind. Die Restfeuchte des gemahlenen Pulvers ist ein Maß für die Vollständigkeit des Trocknungsprozesses.

Als Gelanteil des Polymers werden die unlöslichen Gelpartikel bezeichnet, die aufgrund von Nebenreaktionen während der Polymerisation oder des Trocknungsprozesses entstehen. Zur Bestimmung wird 1 Liter einer 0,1 %igen wässrigen Lösung hergestellt. Die Lösung wird auf ein Metallsieb (0,5 mm) gegossen und mit 2 I Wasser nachgewaschen. Der im Sieb zurückbleibende Gelanteil wird in einen Messzylinder überführt und das Volumen wird bestimmt.

**Tabelle 2**

| | Geleigen- | Trocknung | | Restfeuchte | Gelanteil |
|---|---|---|---|---|---|
| | schaften | Temperatur | Zeit | | |
| | | [°C] | [min] | [%] | [ml] |
| Beispiel 1. | sehr harte kleine gut rieselfähige Teilchen | 80 | 100 | 3 | 30 |
| Beispiel 3 | analog Beispiel 1 | 80 | 90 | 5 | 50 |
| Beispiel 4 | analog Beispiel 1 | 120 | 60 | 8 | 80 |
| Beispiel 5 | analog Beispiel 1 | 100 | 70 | 3 | 40 |
| Beispiel 6 | analog Beispiel 1 | 100 | 60 | 7 | 45 |
| Beispiel 7 | hart rieselfähige Teilchen | 80 | 100 | 5 | 60 |
| Beispiel 8 | sehr hart die Teilchen sind deutlich kleiner als unter Beispiel 1 | 80 | 70 | 5 | 55 |
| Beispiele 9 | hart die Teilchen sind deutlich kleiner als unter Beispiel 1 | 80 | 65 | 5 | 40 |
| Beispiel 2 | | | | 4 | 150 |
| Vergleichsbeispiel 1 | weiches Gel; nur schwer zerkleinerbar; Die Gelteilchen verkleben wieder zu Klumpen | 150 | 240 | 15 | 250 |
| Vergleichsbeispiel 2 | | | | 6 | 280 |

In Tabelle 3 sind Lösungsviskositäten von 0,5%igen wässrigen Lösungen angegeben mit und ohne Zugabe von 1 und 2 % Natriumsulfat. Man sieht deutlich, dass die Viskositäten der Polymerlösungen bei Elektrolytzugabe gegenüber dem Vergleichsbeispiel höher sind, obwohl die Viskositäten ohne Salzzugabe auf selben Niveau liegen. Je mehr von dem assoziativ verdickenden Monomer im Polymer eingebaut ist, umso weniger fällt die Viskosität unter Elektrolyteinfluss ab. Ebenfalls zeigt das Beispiel 5 gegenüber Beispiel 1 geringere Elektrolytempfindlichkeit.

**Tabelle 3**

| | Viskosität 0,5 % ige Lsg. | Viskosität 0,5 % ige Lsg. mit 1 % Natriumsulfat | Viskosität 0,5 % ige Lsg. mit 2 % Natriumsulfat |
|---|---|---|---|
| | [mPAS*s]* | [mPAS*s]* | [mPAS*s]* |
| Beispiel 1 | 3557 | 1332 | 1230 |
| Beispiel 2 | 2512 | 1005 | 988 |
| Beispiel 3 | 3250 | 1198 | 1058 |
| Beispiel 4 | 2400 | 1056 | 987 |
| Beispiel 5 | 3641 | 2132 | 2102 |
| Beispiel 6 | 2631 | 1156 | 1104 |
| Beispiel 7 | 3868 | 2563 | 2498 |
| Beispiel 8 | 4531 | 4690 | 4720 |
| Beispiel 9 | 3738 | 3645 | 3701 |
| | | | |
| Vergleichsbeispiel 1 | 3747 | 106 | 87 |
| Vergleichsbeispiel 2 | 2280 | 45 | 62 |

| | | | |
|---|---|---|---|
| * 20 °C, Brookfield, in H₂O (Gemessen bei 5 Umdrehungen pro Minute) | | | |

### Anwendungsbeispiele

Die anwendungstechnische Beurteilung der erfindungsgemäßen Copolymere erfolgte anhand von einem Testgemisch aus dem Bereich Fliesenklebemörtel.

Hierzu wurde praxisnah geprüft unter Einsatz einer gebrauchsfertig formulierten Trockenmischung, der die erfindungsgemäßen Additive bzw. die Vergleichsprodukte in fester Form zugemischt wurden. Im Anschluss an die Trockenvermischung wurde eine bestimmte Wassermenge zugegeben und mittels einer Bohrmaschine mit G3 Mischer intensiv verrührt (Dauer 2*15 Sekunden). Anschließend durfte die angerührte Mischung 5 min reifen und wurde einer ersten visuellen Prüfung unterzogen. Danach erfolgte die normgerechte Bestimmung von Konsistenz (Ausbreitmaß gemäß DIN 18555, Teil 2) sofort nach der Reifezeit und ein zweites Mal 30 min nach dem Anrühren (nach kurzem Aufrühren mit der Hand). Die Wasserretention wird ca. 15 min nach dem Anrühren gemäß DIN 18555, Teil 7 ermittelt.

Die Zusammensetzung des Fliesenklebemörtels ist aus Tabelle 4 zu entnehmen.

Die erhaltenen Ergebnisse sind in den Tabellen 5 und 6 dargestellt.

**Tabelle 4**

| Zusammensetzung der Testmischung (in Gew.-%) | |
|---|---|
| Komponente | Menge |
| Portlandzement | 36,00¹⁾ |
| Quarzsand (0,05-0,4 mm) | 56,90 |
| Weißpigment³⁾ | 5,50 |
| Cellulossefasern | 0,50 |
| Wasserrückhaltemittel | 0,16 |

| | |
|---|---|
| ¹⁾ CEM II 42,5 R ³⁾ Ulmer weiß "Juraperle MHS" | |

**Tabelle 5**

| Verarbeitungseigenschaften eines Klebemörtels für Keramikfliesen, der mit erfindungsgemäßen und dem Stand der Technik entsprechenden Polymerisaten modifiziert wurde. | | | | | |
|---|---|---|---|---|---|
| Zusatzmittel (Beispiel-Nr.) | Wassermenge (g) | Ausbreit-maß (cm) | Ausbreit-maß nach 30 min (cm) | Luftporen (VoL-%) | Wasserretention (%) |
| 1 | 260 | 14,9 | 15,1 | 13,0 | 99,1 |
| 2 | 260 | 16,6 | 17,2 | 15,8 | 97,9 |
| 3. | 260 | 15,0 | 15,5 | 14,2 | 98,5 |
| 4 | 260 | 19,8 | 19,6 | 12,7 | 98,2 |
| 5 | 260 | 15,0 | 15,1 | 13,7 | 99,5 |
| 6 | 260 | 19,6 | 19,6 | 15,9 | 98,0 |
| 7 | 260 | 14,5 | 14,7 | 16,9 | 98,3 |
| 8 | 260 | 13,2 | 13,7 | 16,1 | 99,4 |
| 9 | 260 | 14,3 | 14,5 | 15,3 | 99,2 |
| Vergleich 1 | 260 | 15,6 | 18,7 | 10,9 | 97,7 |
| Vergleich 2 | 260 | 18,0 | 19,3 | 10 | 95,5 |
| Vergleich 3 | 260 | 17,0 | 17,3 | 10 | 97,3 |

| | | | | | |
|---|---|---|---|---|---|
| Dosierung: 0,16 Gew.-% Klebemörtel: 1000 g | | | | | |

Schließlich wurde die Wasserretention der erfindungsgemäßen Produkte auch bei einer erhöhten Anwendungstemperatur von 40 °C bestimmt und mit den Resultaten der Prüfung herkömmlicher Additive auf Cellulosebasis verglichen. Hierzu wurden der Trockenmörtel, das Anmachwasser sowie die verwendeten Apparaturen durch sechsstündige Vorbehandlung auf 40 °C aufgeheizt. Tabelle 6 zeigt die Ergebnisse dieser Tests.

### Tabelle 6

| Wasserretention erfindungsgemäßer Copolymere in Maschinenputzen bei erhöhter Temperatur im Vergleich zum Stand der Technik. | | | | | |
|---|---|---|---|---|---|
| Zusatzmittel (Beispiel- Nr.) | Wasser (g) | 20 °C | | 40 °C | |
| | | Ausbreitmaß (cm) | WR* (%) | Ausbreitmaß (cm) | WR* (%) |
| 1 | 260 | 14,3 | 98,9 | 13,7 | 99,1 |
| 4 | 260 | 19,1 | 98,4 | 18,7 | 98,6 |
| 5 | 260 | 14,9 | 99,0 | 14,1 | 99,2 |
| 7 | 260 | 14,1 | 98,8 | 13,5 | 98,8 |
| 8 | 260 | 13,5 | 99,3 | 13,9 | 99,0 |
| 9 | 260 | 14,5 | 99,1 | 14,7 | 98,9 |
| Vergleich 3 | 260 | 17,2 | 96,9 | 15,4 | 88,0 |

| | | | | | |
|---|---|---|---|---|---|
| * Wasserretention (WR) Dosierung: 0,16 Gew.-% Trockenmörtel: 1 000 g | | | | | |

## Patentansprüche

1. Wasserlösliche oder wasserquellbare sulfogruppenhaltige Copolymere bestehend aus
a) 3 bis 96 Mol-%. Baugruppen der Formel I 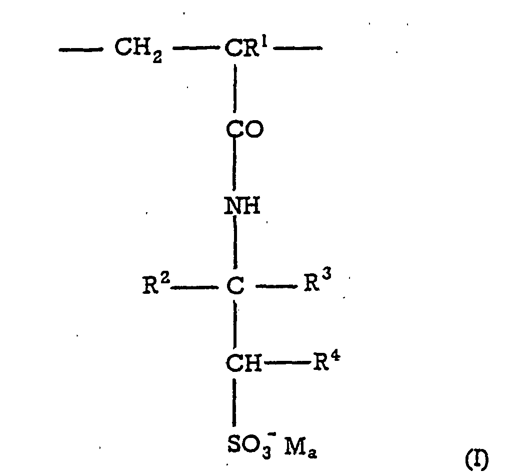 wobei
R¹ = Wasserstoff oder Methyl
R², R³, R⁴ = Wasserstoff, aliphatischer Kohlenwasserstoffrest mit 1 bis 6 C-Atomen, Phenylrest oder mit Methylgruppen substituierter Phenylrest
M = Wasserstoff, ein- oder zweiwertiges Metallkation, Ammonium oder ein organischer Aminrest
a = 1/2 oder 1
bedeuten,
b) 3 bis 96 Mol-% Baugruppen der Strukturformel IIa und/oder IIb 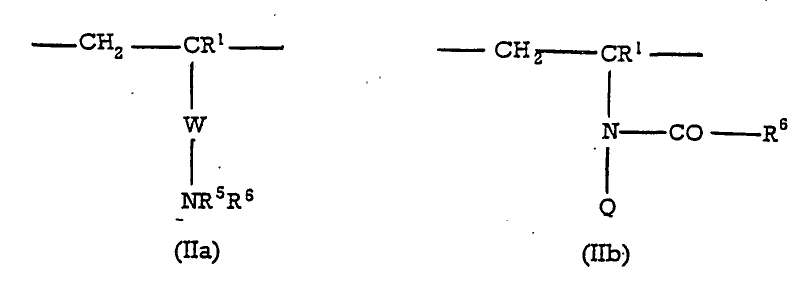 worin
W = -CO-, -CO-O-(CH₂)ₓ-, -CO-NR²-(CH₂)ₓ-
x = 1 bis 6
R⁵ und R⁶ = Wasserstoff, substituierter oder nicht-substituierter aliphatischer Kohlenwasserstoffrest mit 1 bis 20 C-Atomen, cycloaliphatischer Kohlenwasserstoffrest mit 5 bis 8 C-Atomen, Arylrest mit 6 bis 14 C-Atomen und Q = Wasserstoff sowie -CHR⁵R⁷ bedeuten sowie im Falle von Q ≠ H R⁵ und R⁶ in IIb zusammen eine -CH₂-(CH₂)_{y}-Methylengruppe mit y = 1 bis 4 bilden können,
R⁷ = Wasserstoff, aliphatischer Kohlenwassertoffrest mit 1 bis 4 C-Atomen, -COOH oder -COO-Mₐ darstellt und R¹, R², M und a oben genannte Bedeutung besitzen,
c) 0,05 bis 75 Mol-% Baugruppen der Formel IIIa und/oder IIIb 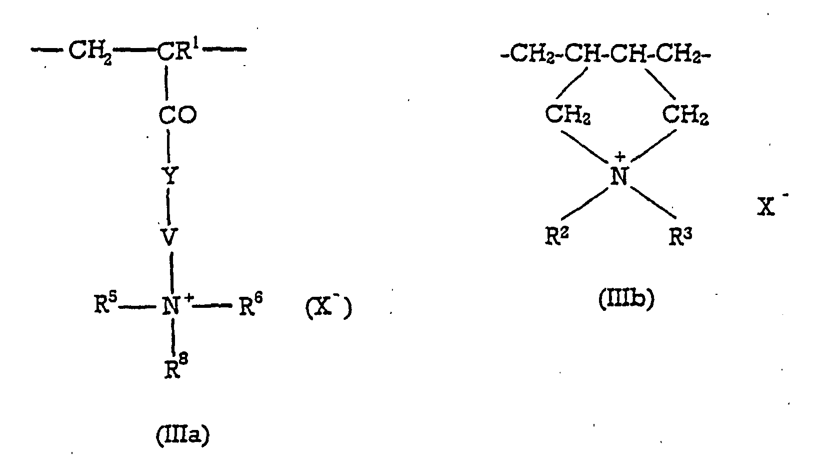 worin
Y = O, NH oder NR⁵
V = -(CH₂)ₓ-, 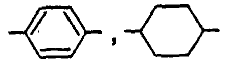
R⁸ = R⁵ bzw. R⁶, -(CH₂)ₓ-SO₃^{⊖} (M), 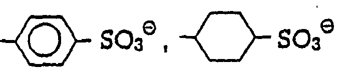
X = Halogen, C₁- bis C₄-Alkyisulfat oder C₁- bis C₄-Alkylsulfonat
und R¹, R², R³, R⁵, R⁶ und x oben genannte Bedeutung besitzen, und
d) 0,01 bis 30 Mol-% Baugrupen der Formel IV 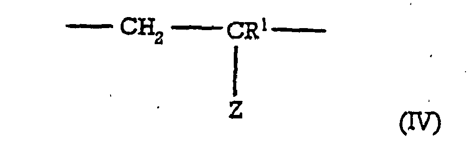 mit
Z = -COO(CₘH₂ₘO)ₙ-R⁹, -(CH₂)ₚ-O(CₘH₂ₘO)ₙ-R⁹
R⁹= 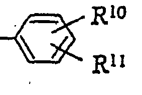
sowie gesättigter oder ungesättigter, linearer oder verzweigter, aliphatischer Kohlenwasserstoffrest mit 22 bis 40 C-Atomen
R¹⁰ = H, C₁-C₄-Alkyl-, Phenyl-, Benzyl-, C₁-C₄-Alkoxy, Halogen, Cyano, -COOH, -COOR⁵, -CO-NH₂, -OCOR⁵
R¹¹ = Arylalkylgruppe mit C₁-C₁₂-Alkyl- und C₆-C₁₄-Arylrest
m = 2 bis 4
n = 0 bis 200
p = 0 bis 20
sowie R¹ und R⁵ die oben genannte Bedeutung besitzen.

2. Copolymere nach Anspruch 1,
**dadurch gekennzeichnet,**
**dass** das ein- oder zweiwertige Metallkation aus Natrium-, Kalium-, Calcium- oder/und Magnesiumionen ausgewählt ist.

3. Copolymere nach Anspruch 1 oder 2,
**dadurch gekennzeichnet,**
**dass** die organischen Aminreste vorzugsweise substituierte Ammoniumgruppen darstellen, die sich ableiten von primären, sekundären oder tertiären C₁- bis C₂₀-Alkylaminen, C₁- bis C₂₀₋Alkanolaminen, C₅- bis C₈-Cycloalkylaminen und C₆- bis C₁₄₋Arylaminen.

4. Copolymere nach einem der Ansprüche 1 bis 3,
**dadurch gekennzeichnet,**
**dass** die Kohlenwasserstoff- oder Arylreste von R⁵ und R⁶ noch mit Hydroxyl-, Carboxyl- oder Sulfonsäuregruppen substituiert sind.

5. Copolymere nach einem der Ansprüche 1 bis 4,
**dadurch gekennzeichnet,**
**dass** X = Chlor, Brom, Sulfat oder Methylsulfat darstellt.

6. Copolymere nach einem der Ansprüche 1 bis 5,
**dadurch gekennzeichnet,**
**dass** sie aus 40 bis 80 Mol-% der Baugruppe a), 15 bis 55 Mol-% der Baugruppe b), 2 bis 30 Mol-% der Baugruppe c) und 0,5 bis 10 Mol-% der Baugruppe d) bestehen.

7. Copolymere nach einem der Ansprüche 1 bis 6,
**dadurch gekennzeichnet,**
**dass** sie ein zahlenmittleres Molekulargewicht von 50.000 bis 10.000.000 aufweisen.

8. Verfahren zur Herstellung der Copolymere nach den Ansprüchen 1 bis 7,
**dadurch gekennzeichnet,**
**dass** eine wässrige Lösemittel- oder Gelpolymerisation oder eine inverse Suspensionspolymerisation in organischen Lösemitteln bei Temperaturen von -20 bis 250 °C unter Zuhilfenahme der üblichen Radikalstarter und sonstiger Hilfsmittel durchgeführt wird.

9. Verfahren nach Anspruch 8,
**dadurch gekennzeichnet,**
**dass** die wässrige Lösemittelpolymerisation bei 5 bis 120 °C und einer Konzentration von 5 bis 20 Gew.-% erfolgt.

10. Verfahren nach Anspruch 8,
**dadurch gekennzeichnet,**
**dass** man den pH-Wert auf einen Wert zwischen 4 und 9 einstellt.

11. Verfahren nach Anspruch 8,
**dadurch gekennzeichnet,**
**dass** man die wässrige Gelpolymerisation bei Temperaturen von -5 bis 50 °C und in einem Konzentrationsbereich von 40 bis 70 Gew.-% durchführt.

12. Verfahren nach Anspruch 11,
**dadurch gekennzeichnet,**
**dass** man den Radikalstart bei der Gelpolymerisation thermisch und/oder photochemisch durchführt.

13. Verfahren nach Anspruch 11 oder 12,
**dadurch gekennzeichnet,**
**dass** die ungerührte Gelpolymerisation in Schichtdicken der Polymerisationslösung von 2 bis 20 cm, insbesondere 8 bis 10 cm, vorgenommen wird.

14. Verfahren nach einem der Ansprüche 11 bis 13,
**dadurch gekennzeichnet,**
**dass** das erhaltene Gel ggf. unter der Zuhilfenahme eines Trennmittels zerkleinert wird.

15. Verfahren nach Anspruch 8,
**dadurch gekennzeichnet,**
**dass** man die inverse Suspensionspolymerisation in einemorganischen Lösemittel in Gegenwart von W/O-Emulgatoren und/oder Schutzkolloiden durchführt.

16. Verfahren nach Anspruch 15,
**dadurch gekennzeichnet,**
**dass** die W/O-Emulgatoren und/oder Schutzkolloide in Anteilen von 0,05 bis 20 Gew.-% bezogen auf die Monomere verwendet werden.

17. Verfahren nach Anspruch 15 oder 16,
**dadurch gekennzeichnet,**
**dass** man als organische Lösemittel aliphatische, cycloaliphatische oder aromatische Kohlenwasserstoffe verwendet.

18. Verwendung der Copolymere nach den Ansprüchen 1 bis 7 als Zusatzmittel für wässrige Baustoffsysteme, die hydraulische Bindemittel, insbesondere Zement, Kalk, Gips oder Anhydrit enthalten.

19. Verwendung der Copolymere nach den Ansprüchen 1 bis 7 als Zusatzmittel für wasserbasierende Anstrich- und Beschichtungssysteme.

20. Verwendung der Copolymere nach Anspruch 18 oder 19,
**dadurch gekennzeichnet,**
**dass** sie in einer Menge von 0,05 bis 5 Gew.-% bezogen auf das Trockengewicht des Baustoff-, Anstrich- bzw. Beschichtungssystems eingesetzt werden.

## Claims

1. Water-soluble or water-swellable copolymers containing sulfo groups and composed of
a) from 3 to 96 mol% of units of the formula I 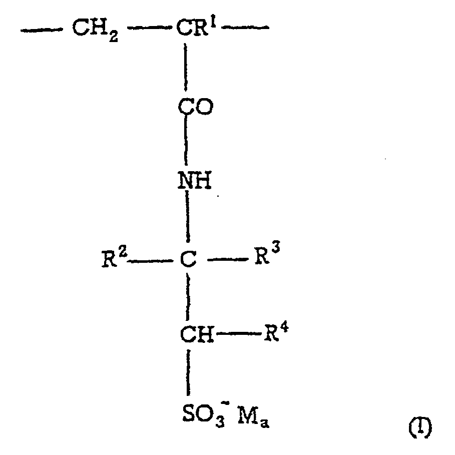 where
R¹ = hydrogen or methyl
R², R³, R⁴ = hydrogen, an aliphatic hydrocarbon radical having from 1 to 6 carbon atoms, a phenyl radical, or a phenyl radical substituted with methyl groups
M = hydrogen, a mono- or divalent metal cation, ammonium, or an organic amine radical
a = 1/2 or 1,
b) from 3 to 96 mol% of units of the structural formula IIa and/or IIb 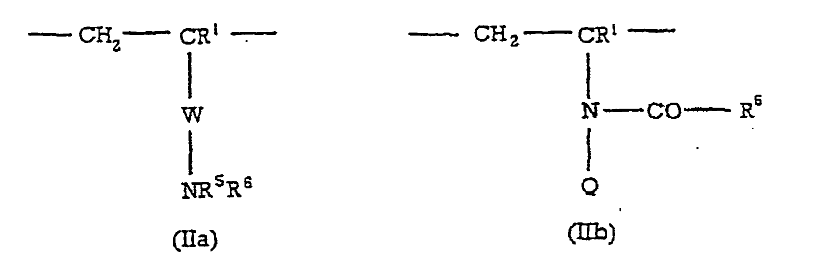 where
W = -CO-, -CO-O- (CH₂)ₓ-, -CO-NR²- (CH₂)ₓ-
x = from 1 to 6
R⁵ and R⁶ = hydrogen, a substituted or unsubstituted aliphatic hydrocarbon radical having from 1 to 20 carbon atoms, a cycloaliphatic hydrocarbon radical having from 5 to 8 carbon atoms, an aryl radical having from 6 to 14 carbon atoms, and Q = hydrogen or else -CHR⁵R⁷, and if Q ≠ H, R⁵ and R⁶ in IIb can together form a -CH₂-(CH₂)_{y}-methylene group where y = from 1 to 4,
R⁷ = hydrogen, an aliphatic hydrocarbon radical having from 1 to 4 carbon atoms, -COOH or -COO-Mₐ, and R¹, R², M and a are as defined above,
c) from 0.05 to 75 mol% of units of the formula IIIa and/or IIIb 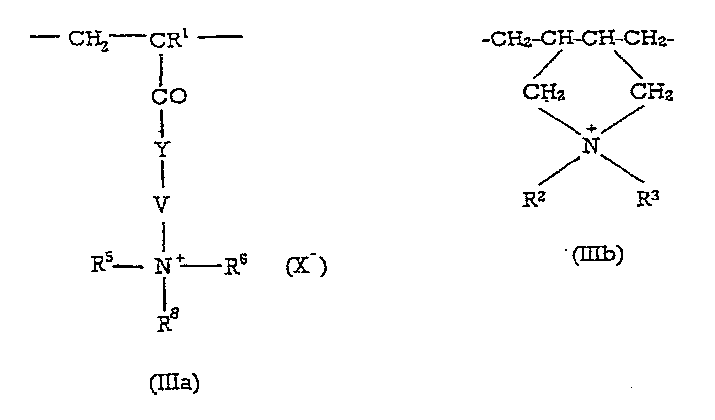 where
Y = O, NH or NR⁵
V = - (CH₂)ₓ-, 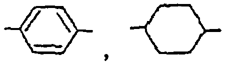
R⁸ = R⁵ or R⁶, -(CH₂)ₓ-SO₃^{▲} (M), 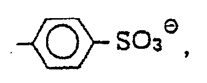 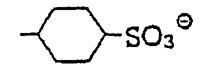
X = halogen, C₁-C₄-alkyl sulfate or C₁-C₄₋alkylsulfonate
and R¹, R², R³, R⁵, R⁶, and x are as defined above, and
d) from 0.01 to 30 mol% of units of the formula IV 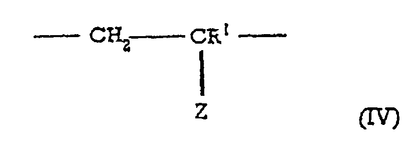 where
Z = -COO(CₘH₂ₘO)ₙ-R⁹, -(CH₂)ₚ-O(CₘH₂ₘO)ₙ-R⁹
R⁹ = 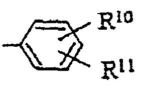
or else a saturated or unsaturated, linear or branched, aliphatic hydrocarbon radical having from 22 to 40 carbon atoms
R¹⁰ = H, C₁-C₄-alkyl-, phenyl-, benzyl-, C₁-C₄₋alkoxy, halogen, cyano, -COOH, -COOR⁵, -CO-NH₂, -OCOR⁵
R¹¹ = arylalkyl group having a C₁-C₁₂-alkyl radical and C₆-C₁₄-aryl radical
m = from 2 to 4
n = from 0 to 200
p = from 0 to 20
and R¹ and R⁵ are as defined above.

2. Copolymers according to Claim 1,
**characterized in that**
the mono- or bivalent metal cation has been selected from sodium ions, potassium ions, calcium ions, or/and magnesium ions.

3. Copolymers according to Claim 1 or 2,
**characterized in that**
the organic amine radicals are preferably substituted ammonium groups which derive from primary, secondary, or tertiary C₁-C₂₀-alkylamines, C₁-C₂₀-alkanolamines, C₅-C₈-cycloalkylamines, and C₆-C₁₄-arylamines.

4. Copolymers according to any of Claims 1 to 3,
**characterized in that**
the hydrocarbon radicals or aryl radicals of R⁵ and R⁶ also have substitution with hydroxyl, carboxyl, or sulfonic acid groups.

5. Copolymers according to any of Claims 1 to 4,
**characterized in that**
X = chlorine, bromine, sulfate, or methyl sulfate.

6. Copolymers according to any of Claims 1 to 5,
**characterized in that**
they have composed of from 40 to 80 mol% of the unit a), from 15 to 55 mol% of the unit b), from 2 to 30 mol% of the unit c), and from 0.5 to 10 mol% of the unit d).

7. Copolymers according to any of Claims 1 to 6,
**characterized in that**
they have a number-average molecular weight of from 50 000 to 10 000 000.

8. Method for preparing the copolymers according to Claims 1 to 7,
**characterized in that**
an aqueous solvent polymerization or gel polymerization or an inverse suspension polymerization in organic solvents at temperatures of from -20 to 250°C is carried out with the aid of the usual free-radical initiators and of other auxiliaries.

9. Method according to Claim 8,
**characterized in that**
the aqueous solvent polymerization takes place at from 5 to 120°C and at a concentration of from 5 to 20% by weight.

10. Method according to Claim 8,
**characterized in that**
the pH is set to a value of from 4 to 9.

11. Method according to Claim 8,
**characterized in that**
the aqueous gel polymerization is carried out at temperatures of from -5 to 50°C and in a range of concentration of from 40 to 70% by weight.

12. Method according to Claim 11,
**characterized in that**
for the gel polymerization, the free-radical initiation is thermal and/or photochemical.

13. Method according to Claim 11 or 12,
**characterized in that**
the gel polymerization is undertaken without agitation in layers of polymerization solution of thickness from 2 to 20 cm, in particular from 8 to 10 cm.

14. Method according to any of Claims 11 to 13,
**characterized in that**
the resultant gel is comminuted, where appropriate with the aid of a release agent.

15. Method according to Claim 8,
**characterized in that**
the inverse suspension polymerization is carried out in an organic solvent in the presence of W/O emulsifiers and/or protective colloids.

16. Method according to Claim 15,
**characterized in that**
the proportions used of the W/O emulsifiers and/or protective colloids are from 0.05 to 20% by weight, based on the monomers.

17. Method according to Claim 15 or 16,
**characterized in that**
the organic solvents used comprise aliphatic, cycloaliphatic, or aromatic hydrocarbons.

18. Use of the copolymers according to Claims 1 to 7 as additives for aqueous construction-material systems which comprise hydraulic binders, in particular cement, lime, gypsum, or anhydrite.

19. Use of the copolymers according to Claims 1 to 7 as additives for water-based paint systems and water-based coating systems.

20. Use of the copolymers according to Claim 18 or 19,
**characterized in that**
the amount used of these is from 0.05 to 5% by weight, based on the dry weight of the construction-material system, paint system, or coating system.

## Revendications

1. Copolymères contenant des groupes sulfo, solubles dans l'eau ou gonflant dans l'eau, constitués de
a) 3 à 96 % en mol de groupes constitutifs de formule I 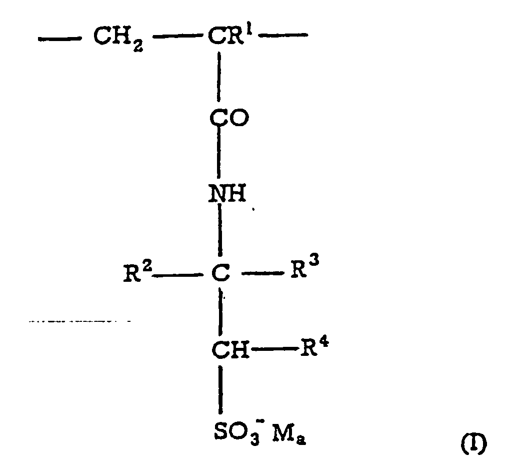 dans laquelle
R¹ représente un hydrogène ou un méthyle,
R², R³, R⁴ représentent un hydrogène, un radical d'hydrocarbure aliphatique de 1 à 6 atomes de carbone, un reste phényle ou un radical phényle substitué par des groupes méthyle,
M représente un hydrogène, un cation métallique mono- ou divalent, un ammonium ou un radical d'amine organique,
a = 1/2 ou 1,
b) 3 à 96 % en mol de groupes constitutifs de formule développée IIa et/ou IIb 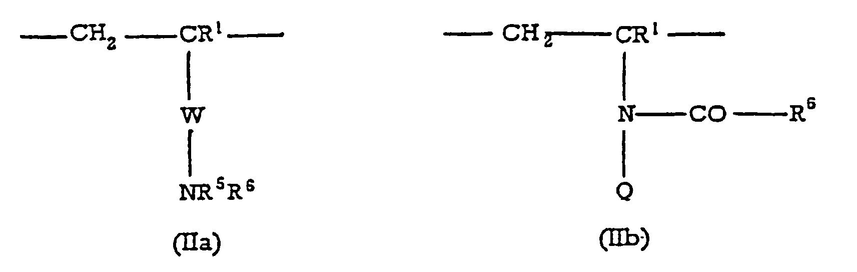
où W = -CO-, -CO-O-(CH₂)ₓ-, -CO-NR²-(CH₂)ₓ-,
x =1 à 6
R⁵ et R⁶ représentent un hydrogène, un radical substitué ou non substitué d'hydrocarbure aliphatique de 1 à 20 atomes de carbone, d'hydrocarbure cycloaliphatique de 5 à 8 atomes de carbone, d'aryle de 6 à 14 atomes de carbone, et Q représente un hydrogène et -CHR⁵R⁷, et, dans le cas où Q est différent de H, R⁵ et
R⁶ dans IIb peuvent former ensemble un groupe méthylénique -CH₂-(CH₂)_{y}- avec y = 1 à 4,
R⁷ représente un hydrogène, un radical d'hydrocarbure aliphatique de 1 à 4 atomes de carbone, -COOH ou -COO-Mₐ, et R¹, R², M et a ont la signification indiquée ci-dessus,
c) 0,05 à 75 % en mol de groupes constitutifs de formule IIIa et/ou IIIb 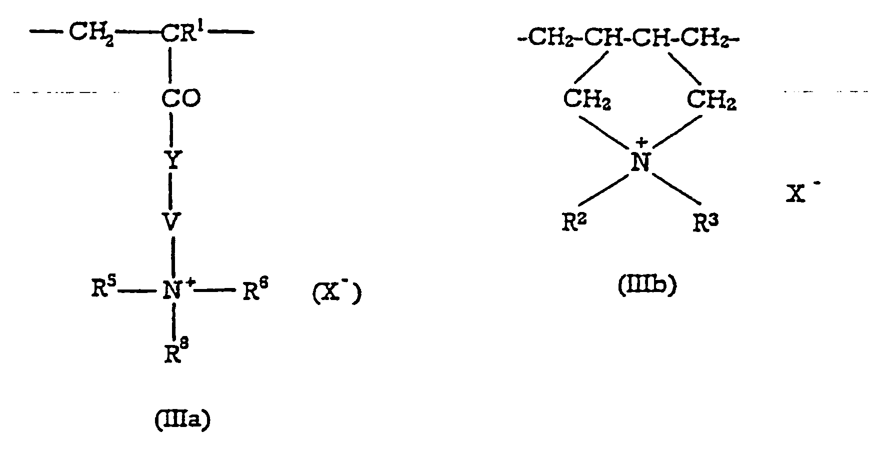 où
Y = O, NH ou NR⁵,
V = -(CH₂)ₓ-, 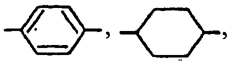
R⁸ = R⁵ ou R⁶, -(CH₂)ₓ-SO₃⊖ (M), 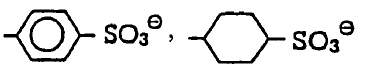
X représente un halogène, un alkylsulfate en C₁-C₄ ou un alkylsulfonate en C₁-C₄,
et R¹, R², R³, R⁵, R⁶ et x ont la signification indiquée ci-dessus, et
d) 0,01 à 30 % en mol de groupes constitutifs de formule IV 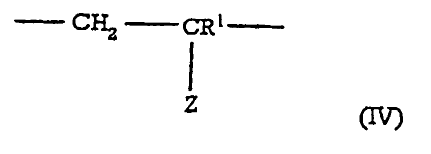 dans laquelle
Z = -COO(CₘH₂ₘO)ₙ-R⁹, -(CH₂)ₚ-O(CₘH₂ₘO)ₙ-R⁹,
R⁹ = 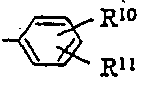
ainsi qu'un radical d'hydrocarbure aliphatique linéaire ou ramifié, saturé ou insaturé, de 22 à 40 atomes de carbone,
R¹⁰ représente H, alkyle en C₁-C₄, phényle, benzyle, alcoxy en C₁-C₄, halogéno, cyano, -COOH, -COOR⁵, -CO-NH₂, -OCOR⁵,
R¹¹ représente un groupe arylalkyle avec un radical alkyle en C₁-C₁₂ et un radical aryle en C₆-C₁₄,
m=2 à 4,
n = 0 à 200,
p = 0 à 20,
et R¹ et R⁵ ont la signification donnée ci-dessus.

2. Copolymères selon la revendication 1, **caractérisés en ce que** le cation métallique mono- ou divalent est choisi parmi les ions sodium, potassium, calcium et/ou magnésium.

3. Copolymères selon la revendication 1 ou 2, **caractérisés en ce que** les radicaux d'amine organique représentent de préférence des groupes ammonium substitués qui dérivent d'alkylamines en C₁-C₂₀, d'alcanolamines en C₁-C₂₀, de cycloalkylamines en C₅-C₈ et d'arylamines en C₆-C₁₄ primaires, secondaires ou tertiaires.

4. Copolymères selon l'une des revendications 1 à 3, **caractérisés en ce que** les radicaux d'hydrocarbure ou d'aryle de R⁵ et R⁶ sont substitués en outre par des groupes hydroxyle, carboxyle ou acide sulfonique.

5. Copolymères selon l'une des revendications 1 à 4, **caractérisés en ce que** X représente du chlore, du brome, un sulfate ou un méthylsulfate.

6. Copolymères selon l'une des revendications 1 à 5, **caractérisés en ce qu'**ils sont constitués de 40 à 80 % en mol du groupe constitutif a), de 15 à 55 % en mol du groupe constitutif b), de 2 à 30 % en mol du groupe constitutif c) et de 0,5 à 10 % en mol du groupe constitutif d).

7. Copolymères selon l'une des revendications 1 à 6, **caractérisés en ce qu'**ils présentent une masse molaire moyenne en nombre de 50 000 à 10 000 000.

8. Procédé de préparation des copolymères selon les revendications 1 à 7, **caractérisé en ce que** l'on effectue une copolymérisation en solution aqueuse ou en gel aqueux ou une polymérisation en suspension inverse dans des solvants organiques à des températures de -20 à 250°C à l'aide des amorceurs radicalaires et autres agents auxiliaires classiques.

9. Procédé selon la revendication 8, **caractérisé en ce que** la polymérisation en solution aqueuse s'effectue à une température de 5 à 120°C et à une concentration de 5 à 20 % en masse.

10. Procédé selon la revendication 8, **caractérisé en ce que** l'on ajuste le pH à une valeur entre 4 et 9.

11. Procédé selon la revendication 8, **caractérisé en ce que** l'on effectue la polymérisation en gel aqueux à des températures de -5 à 50°C et dans un domaine de concentration de 40 à 70 % en masse.

12. Procédé selon la revendication 11, **caractérisé en ce que** l'on effectue l'amorçage radicalaire dans la polymérisation en gel par voie thermique et/ou photochimique.

13. Procédé selon la revendication 11 ou 12, **caractérisé en ce que** la polymérisation en gel sans agitation s'effectue dans des épaisseurs de couche de la solution de polymérisation de 2 à 20 cm, en particulier de 8 à 10 cm.

14. Procédé selon l'une des revendications 11 à 13, **caractérisé en ce que** l'on fragmente le gel obtenu, éventuellement à l'aide d'un agent de séparation.

15. Procédé selon la revendication 8, **caractérisé en ce que** l'on effectue la polymérisation en suspension inverse dans un solvant organique en présence d'émulsionnants de type eau dans l'huile et/ou de colloïdes protecteurs.

16. Procédé selon la revendication 15, **caractérisé en ce que** l'on utilise les émulsionnants de type eau dans l'huile et/ou les colloïdes protecteurs en des proportions de 0,05 à 20 % en masse par rapport aux monomères.

17. Procédé selon la revendication 15 ou 16, **caractérisé en ce que** l'on utilise des hydrocarbures aliphatiques, cycloaliphatiques ou aromatiques comme solvants organiques.

18. Utilisation des copolymères selon les revendications 1 à 7 comme additifs pour des systèmes de matériaux de construction aqueux qui contiennent des liants hydrauliques, en particulier du ciment, de la chaux, du gypse ou de l'anhydrite.

19. Utilisation des copolymères selon les revendications 1 à 7 comme additifs pour des systèmes de peinture et de revêtement à base d'eau.

20. Utilisation des copolymères selon la revendication 18 ou 19, **caractérisée en ce qu'**ils sont utilisés en une quantité de 0,05 à 5 % en masse par rapport à la masse sèche du système de matériau de construction, de peinture ou de revêtement.
